# EUROPEAN PATENT SPECIFICATION

(11) **EP 4 077 545 B1**
(45) Date of publication and mention of the grant of the patent: **23.07.2025**
(21) Application number: 20838433.9
(22) Date of filing: 18.12.2020
(51) Int. Cl.: C09C 1/36, B41J 2/01, C09D 11/322

(54) **PRINTING INK CONTAINING UNDRIED, COATED TITANIUM DIOXIDE**
DRUCKFARBE, DIE UNGETROCKNETES, BESCHICHTETES TITANDIOXID ENTHÄLT
ENCRE D'IMPRESSION CONTENANT DU DIOXYDE DE TITANE ENCROBÉ ET NON SÉCHÉ

(30) Priority: 18.12.2019 EP 19000569
(43) Date of publication of application: 26.10.2022
(73) Proprietor: KRONOS INTERNATIONAL, Inc., 51373 Leverkusen (DE)
(72) Inventor: GROSSER, Ingo, 22391 Hamburg (DE); KOLMER-ANDERL, Nicole, 40764 Langenfeld (DE); HERBST, Annika, 40597 Düsseldorf (DE); MÜNZER, Simon, 40764 Langenfeld (DE)
(74) Representative: Vollmers, Hans-Gerd
(86) International application number: PCT/EP2020/086973
(87) International publication number: WO 2021/123127

(56) References cited:
- EP-A1- 1 924 658
- WO-A1-2019/076790
- US-A1- 2008 268 156

## Description

### Field of the Invention

The invention relates to an aqueous printing ink comprised of undried, coated titanium dioxide pigment particles obtainable by a method comprising the steps of (i) providing an aqueous suspension of titanium dioxide base pigments, and (ii) forming at least one coat on said titanium dioxide base pigments as well as to an aqueous slurry containing the pigment particles. **In** addition, the present invention pertains to a method for obtaining said aqueous printing ink, a method for printing the aqueous printing ink onto the surface of a substrate, and a printing ink container as well as an inkjet printer comprising said ink. Finally, the present invention relates to the use of the aqueous printing ink to print a printing image onto the surface of a substrate.

### Technological Background of the Invention

Printing inks are used to provide a white print image with a good visibility when printed on transparent and colored surfaces. There are numerous applications for said inks such as computer chips and printed circuit boards, tapes, glass, plastics, textiles and in particular packagings based on plastics, polymeric films, papers, as well as industrial coatings which are commonly printed on automotives, planes and trains.

Printing inks, in particular for inkjet technologies, for high-end application use titanium dioxide as white pigment due to its high brightness and high refractive index. **In** general, it is essential to printing inks for inkjet technologies to possess a low viscosity, as otherwise the ink cannot be processed through the nozzles of the printhead and the nozzles are clogged. Moreover, water can be employed as solvent which is less toxic, sustainable and cost sensitive in comparison to inks based on organic solvents.

However, the use of titanium dioxide particles in printing inks entails various challenges. One of the biggest challenges is the sedimentation tendency of titanium dioxide particles in inks, in particular in slurries with a low viscosity of less than 20 mPas. This leads to significant problems. For example, sedimentation results in less dispersed titanium dioxide in the ink which negatively effects important core properties of the ink such as hiding power and gloss. Moreover, the sedimentation can lead to clogged nozzles of the print head. As a result, the content of titanium dioxide particles in inks is limited.

In WO 2014/135843 A1, examples of a white ink are described with a titanium dioxide content of 8 to 12 wt.%. However, studies from other areas of paints and coatings clearly show that in order to achieve a hiding power of at least 98, a titanium dioxide content of at least 18 wt.% referred to the composition is required. At present, this is compensated by a higher layer thickness usually achieved by multiple printings of the ink to the substrate to be printed on. Of course, this is time-intensive and thus cost-intensive. Ideally, a single coat achieved by a single print possesses the desired hiding power.

The prior art approaches the settling tendency by re-dispersing the particles prior to its use. This can be accomplished by equipping print head systems with circulation pumps keeping the ink in motion. Of course, this requires space and energy for the pumps. In other print head systems in which no circulation pumps can be integrated, the inks sometimes have to be manually re-shaken in a time-consuming and resource-consuming manner. In addition, a high settling tendency or poor re-dispersibility also increases the risk that print heads are clogged after prolonged life in the so-called latency by poorly dispersed and thus too large agglomerates of titanium dioxide particles.

US 2019/0345354 describes a white color paste for digital textile printing ink. The comparable high titanium dioxide content is realized by the use of dispersant and also a wetting agent. However, the use of additional compounds such as wetting agents is not desirable, as more costs are involved and the compounds may have an undesirable impact upon the ink and the printing image.

EP 1924658 A1 pertains to an aqueous inkjet ink comprising a polymerically dispersed titanium dioxide and a crosslinked polyurethane binder.

US 2008/268156 A1 provides a white ink composition for ink jet textile printing by which even if printing is carried out without discoloring the dye of textile piece, the whiteness degree of a dyed article obtained is high and the dyed article superior in coating film durability and laundering fastness is further obtained without losing the drape of the textile piece.

WO 2019/076790 A1 provides a method for manufacturing pigmentary titanium dioxide particles coated with SiO₂ coating layer.

Hence, there is a need in the art for a sustainable aqueous printing ink with titanium dioxide as white pigment with a low viscosity, reduced settling tendency and a high shelf life, which are moreover easy to handle.

### Object and Brief Description of the Present Invention

**It** has been surprisingly found that an aqueous printing ink comprising undried, coated titanium dioxide pigment particles obtainable by a method comprising the steps of
(i) providing an aqueous suspension of titanium dioxide base pigments, and
(ii) forming at least one coat on said titanium dioxide base pigments, the coat is selected from the group consisting of silica, alumina, zirconia and mixtures thereof to obtain the undried, coated titanium dioxide pigment particles possess an improved shelf life with little sedimentation tendency. Therefore, there is less need to re-disperse the ink prior to its use neither manually nor by means of a devise such as a pump. Any amount of sediment that does form can easily be re-dispersed and does not form a sticky sediment such as inks of the art. This makes the ink easy to handle and imparts the ink of the present invention a long shelf life.

The approach of the present invention is not based on dispersion auxiliaries, anti-settling agents or higher viscosities, but on the titanium dioxide particle and its surface.

Titanium dioxide base material is manufactured according to the sulphate process or chloride process, both well-established in the art. To adapt the physical properties according to the requirements of the application, the obtained base pigment is commonly subject to aftertreatment by applying at least one coat onto said base pigment. The base pigments are preferably in the form of primary particles as opposed to agglomerates. Primary particle, as used herein, relates to a particle which may form together with at least one other particle to form agglomerates and aggregates. This definition of primary particles also covers twins and multiple twins, which are known in the art and can be analyzed by, for example, TEM analysis. If necessary, said base pigment or the agglomerates thereof may be milled before or after using established methods in order to increase the proportion of the base pigment that is present as primary particles as opposed to agglomerates. A known post-treatment coat is the deposition of an alumina layer which is applied as the last layer and provides for improved dispersibility when used in coating applications. After applying the layers, the pigment is washed and filtered and then commonly dried with a temperature of more than 100 °C and optionally dry-milled. In these drying steps, water is evaporated and the number of molecules with chemical groups, which can interact with water and/or other compounds such as dispersing agents, is reduced to a high extent. Dried titanium dioxide pigments particles are obtained.

Conventional coats contain among them, inter alia, silica, alumina and zirconia, which are alternatively present as mixtures and/or may be doped with common dopants. In standard applications, the reduction of water and OH groups form the base or coated pigment particles is essential. For example, when the pigment is processed in a medium at elevated temperature, the pigment may release water which adversely affects the product properties. In the production of polymers, water vapor can thus be formed in the extrusion step leading to undesired bubble formation in the resulting polymer product. Moisture in pigments for laminate applications together with oxygen an exposed to UV radiation greys undesirably the laminate.

The present invention dispenses with any drying of the coated titanium dioxide particles. The pigment particles of the present invention are undried, coated titanium dioxide pigment particles with a coat as described herein. As a result of being undried coated particles, the coated pigment particles possess significantly more chemical groups on the particle surface which can interact with water and/or dispersing agents compared to dried particles which are used as pigments in conventional inks.

Therefore, in a first aspect, the present invention is directed to an aqueous printing ink comprising undried, coated titanium dioxide pigment particles obtainable by a method comprising the steps of:
(i) providing an aqueous suspension of titanium dioxide base pigments, and
(ii) forming at least one coat on said titanium dioxide base pigments, the coat is selected from the group consisting of silica, alumina, zirconia and mixtures thereof to obtain the undried, coated titanium dioxide pigment particles.

In a second aspect, the present invention pertains to a method for obtaining an aqueous printing ink comprising undried, coated titanium dioxide pigment particles comprising the steps of:
(i) providing an aqueous suspension of titanium dioxide base pigments,
(ii) coating the titanium dioxide base pigments with at least one coat selected from the group consisting of silica, alumina, zirconia and mixtures thereof in order to obtain undried, coated titanium dioxide pigment particles,
(iii) optionally separating and washing the undried, coated titanium dioxide pigment particles from the aqueous suspension, and re-dispersing the obtained undried, coated titanium dioxide pigment particles in water to obtain the aqueous printing ink.

In a further aspect, the present invention is directed to an aqueous slurry comprising i) 40.0 to 70.0 wt.%, preferably 45.0 to 65.0 wt.%, more preferably 50.0 to 60.0 wt.% undried, coated titanium dioxide pigment particles with respect to the total weight of the aqueous slurry obtainable by a method comprising the steps of
a) providing an aqueous suspension of titanium dioxide base pigments, and
b) forming at least one coat on said titanium dioxide base pigments, the coat is selected from the group consisting of silica, alumina, zirconia and mixtures thereof to obtain the undried, coated titanium dioxide pigment particles; and
(ii) 0.2 to 20.0 wt.%, preferably 0.8 to 15 wt.%, and more preferably 1.5 to 10.0 wt.% of a dispersant with respect to the total weight of the aqueous slurry; and/or (iii) 10.0 to 60.0 wt.%, preferably 20.0 to 50.0 wt.%, and more preferably 30.0 to 40.0 wt.% water with respect to the total weight of the aqueous slurry.

In a further aspect, the present invention pertains to a printing ink container comprising an aqueous printing ink as claimed herein.

In yet a further aspect, the present invention is directed to an inkjet printer, which comprises an aqueous printing ink as claimed herein.

In a final aspect, the present invention pertains to an aqueous printing ink comprising undried, coated titanium dioxide pigment particles as claimed herein to print a printing image onto the surface of a substrate selected from the group consisting of paper, décor papers, corrugated cardboards, packaging, plastics, polymeric films, printed circuit boards, computer chips, automotives, wood, metal, glass, textiles and leather.

Further advantageous embodiments are covered by the independent claims.

### Description of the invention

These and further aspects, features and advantages of the invention become apparent to the skilled person from a study of the following detailed description and claims. Each feature from one aspect of the invention may also be used in any other aspect of the invention. Further, of course, the examples contained herein are intended to describe and illustrate the invention, but not to limit it, and in particular, the invention is not limited to such examples. Numerical ranges stated in the form "from x to y" include the values mentioned and those values that lie within the range of the respective measurement accuracy as known to the skilled person. If several preferred numerical ranges are stated in this form, of course, all the ranges formed by a combination of the different end points are also included.

All percentages stated in connection with the compositions herein described relate to percent by weight (wt.%) unless explicitly stated otherwise, respectively based on the mixture of composition in question.

"At least one" as used herein relates to one or more, i.e. 1, 2, 3, 4, 5, 6, 7, 8, 9 or more. With respect to a coat, for example, the value relates to the coat and not to the absolute number of molecules in the coat.

The aqueous printing ink of the present invention can be printed onto a great variety of substrates such as cloth and packagings based on plastics, polymeric films and papers. "Aqueous", as used herein, means that the ink is based on water used as solvent. The ink is comprised of undried, coated titanium dioxide pigment particles, which are obtainable by a method comprising the steps of (i) providing an aqueous suspension of titanium dioxide base pigments, and then (ii) forming at least one coat on said titanium dioxide base pigments, the coat is selected from the group consisting of silica, alumina, zirconia and mixtures thereof to obtain the undried, coated titanium dioxide pigment particles.

In step (i), an aqueous suspension of titanium dioxide base pigment is provided. "Titanium dioxide base pigments", as used herein, refers to titanium dioxide base pigments obtained by the sulphate or chloride process which are optionally milled, but have not been subject to any coating process or related treatment. Further, said base pigment may be present in the crystal structures of rutile, anatase or brookite, usually in the crystal structures of rutile or anatase. Rutile is particularly suitable as compared to anatase because of its lower photolytic catalytic activity. Preferably, said base pigment consists of at least 98 wt.%, preferably of at least 99 wt.% rutile referred to the total weight of said particles. The concentration of the base pigment is well known in the art ranging from 150 g/L to 500 g/L, and is preferably 400 g/L. The suspension is obtained in known devices and can be stirred in order to obtain a homogeneous suspension.

To form the respective coat in step (ii), precursors known in the art can be used. To form a silica layer, any known silica precursor can be used such as sodium silicate, potassium silicate, and lithium silicate. Preferably, sodium silicate is used. By known methods and techniques, the silica coat can be applied. The addition of the precursor is preferably conducted under agitation, and at elevated temperature, if necessary. The precursor can be added to the suspension over a course of 5 to 60 minutes, and preferably over the course of 30 minutes. The formed silica coat of the invention does not only comprise not only silica, but all compounds obtained by the coating such as silicon hydroxide, silicon oxide hydroxide and water containing silica phases.

To from an alumina coat, any suitable alumina precursor can be used. Preferably, sodium aluminate, aluminum sulfate, aluminium nitrate or aluminium chloride are used as precursors, and the coat can be formed by known methods and techniques such as adding a base thereby adjusting the pH above 7. The addition of the precursor is preferably conducted under agitation, and at elevated temperature, if necessary. The precursor can be added to the suspension over a course of 5 to 60 minutes, and preferably over the course of 30 minutes. The obtained alumina layer of the invention does not only comprise alumina only, but all compounds obtained by the coating such as alumina hydroxide, aluminum oxide hydroxide and water containing alumina phases.

To from a zirconia coat, any suitable zirconia precursor can be used. Preferably, zirconium oxychloride, zirconium sulfate and zirconium carboxylate are used as precursors, and the coat can be formed by using methods and techniques known in the art. The addition of the precursor is preferably conducted under agitation, and at elevated temperature, if necessary. The precursor can be added to the suspension over a course of 5 to 60 minutes, and preferably over the course of 30 minutes. The obtained zirconia layer of the invention does not only comprise not only zirconia, but all compounds obtained by the coating such as zirconium hydroxide, zirconium oxide hydroxide and water containing zirconium phases.

If a mixture of silica, alumina and zirconia coat is formed, the respective precursors can to be used. Further, combinations of silica, alumina and zirconia coats can be formed, either by forming a single coating layer that contain a mixture of two coating materials, either a uniform mixture or with varying gradients of each coating material, or by applying sequential coats of separate coating materials. Various methods of forming each type of coat, mixed coats and multiple coating layers are well known to those of skill in the art.

First, step (i) is conducted before the at least one coat is formed in step (ii) to obtain the undried, coated titanium dioxide pigment particles.

Within the scope of the invention, the titanium dioxide pigment particle has a primary size such that it scatters the visible light is scatter, ideally to a high rate. The particle size is the mass-related median d50 (hereinafter: d50) of from 200 to 400 nm determined by disc centrifuge. Further, preferably particle sizes (both agglomerates and primary particle sizes) greater than 600 nm should be excluded to the greatest extent possible, and preferably completely excluded, as they lead to clogging of the ink jet printhead nozzles.

"Undried", as used herein, refers to a titanium dioxide pigment particles which were coated according to the present invention, but subsequent to the coating process were not subject to any drying process with a temperature exceeding 95 °C, preferably exceeding 80 °C, in particular not to an established drying processes such as spray drying or any mechanical drying with a temperature exceeding 95 °C, preferably exceeding 80 °C.

Without wishing to be bond to a scientific theory, it is believed that the undried, coated pigment particles of the present invention possess significantly more chemical groups such as hydroxide groups and oxide hydroxide groups on the surface which are capable of forming hydrogen bonds with the aqueous medium and/or dispersants compared to state of the art inks with pigments which were dried after a coat was applied. This results in significant less settlement tendencies and longer shelf life. More importantly, the ink can contain a higher amount of titanium dioxide pigment particles without negatively affecting other properties or the need for high amounts of wetting and/or dispersing agents. The ink has, due to its high titanium dioxide concentration an improved hiding power. Less coats achieved by a just a few prints already possess the desired hiding power which makes it superior to standard inks which have to be printed more often onto the substrate to achieve the same print.

In a preferred embodiment, the at least one coat is alumina. The latter is formed directly on the pigment base material. Moreover, the alumina coat is of from 0.1 and 10 wt.%, preferably 2 to 5 wt.% referred to the total weight of the titanium dioxide pigment particles.

In another preferred embodiment, a silica coat is formed on said base pigments, and on said silica coat an alumina coat is formed. The silica coat is of from 0.01 and 5 wt.%, preferably 0.1 to 2 wt.%, and the alumina coat deposited on the silica coat is of from 0.1 and 10 wt.%, preferably 2 to 5 wt.% referred to the total weight of the titanium dioxide pigment particle.

After the formation of the at least one coat is completed, the titanium dioxide pigment particles are preferably separated from the aqueous suspension and washed in step (iii).

In another preferred embodiment of the invention, the undried, coated titanium dioxide pigment particles are subject to the further steps of (iv) drying the undried, coated titanium dioxide particles to obtain dried, coated titanium dioxide pigment particles, (v) providing an aqueous suspension of the dried, coated titanium dioxide particles, and (vi) transforming the dried, coated titanium dioxide particles into the undried, coated titanium dioxide particles. By drying the undried, coated titanium dioxide particles, the latter are dried. By doing so, agglomerated pigment particles are obtained. This drying step can be accomplished by methods and techniques known in the art. Subsequently, a suspension of the dried, coated titanium dioxide particles can be provided, also by using standard methods and techniques. The transformation of the dried, coated titanium dioxide particles back into the undried state in step (vi) can be performed under certain condition. This involves, for example, agitating the suspension, a temperature of 40 °C to 80 °C at a pH value of 9 to 14 or 1 to 4 optionally under pressure of more than 1 atmosphere and optionally in presence of a dispersing agent and subsequent milling. Without being bound by theory, it is believed that treatment of the coated titanium dioxide particles under these conditions result in the outer coating layer being partially dissolved into the suspension. Using known coating techniques that are based upon the composition of the outer coating layer, the coating can be redeposited on the pigment particles, such as by further adjusting the pH or temperature of the suspension. In this context, the final coating can be considered to be applied during this redeposition process and thus the coated titanium dioxide particle is once again considered to be undried. This embodiment is advantageous, as the dried, coated titanium dioxide can be packed and stored for a long period of time. After storage, the dried is transformed into the undried, coated titanium dioxide particles having the same advantageous surface properties making it particularly suitable for a white pigment in aqueous printing inks as described within the scope of the present invention. However, results showed that the dispersibility of the thus obtained undried, coated titanium dioxide particles is inferior to the dispersibility of the undried, coated titanium dioxide particles obtained after conducting the steps (i) and (ii) and optionally step (iii). Therefore, it is preferred that at all times the coated titanium dioxide pigment remains in the undried state and thus is never subjected to a drying process as discussed above.

The steps (iii) to (vi) are conducted in the order (iii), (iv), (v) and then (vi).

Preferably, the aqueous printing ink of the present invention comprises undried, coated titanium dioxide pigment particles as described herein and further comprises at least one dispersant selected from the group consisting of electrostatic dispersant, electrosteric dispersant and steric dispersant. A "steric dispersant", as used herein, refers to a dispersant with at least one attaching group attaching to a coated, undried titanium dioxide pigment particles and possesses segments which stand out from the pigment surface to provide mechanical repulsive forces. An "electrostatic dispersant", as used herein, refers to a dispersant with at least one attachment group with attaches to the coated, undried titanium dioxide pigment particles and establishes electric double layer causing repulsive forces. An "electrosteric dispersant", as used herein, is a combination of a steric and a electrostatic dispersant. The attachment group of the dispersants can be selected from those known from the art suitable to attach to the coated, undried titanium dioxide pigment particles. They can be selected from anionic, cationic, amphoteric and non-ionic groups such as carboxyl, phosphate, sulfate, hydroxide, and tetraalkyl amine such as tetra methyl amine, preferably from carboxyl, phosphate and sulfate. In a more preferred embodiment, the dispersant bears not only one type of attachment group, but two, three or more. Moreover, the dispersant can also bear different types of attachment group such as at least one carboxyl and at least one sulfate group. The dispersant has a molecular weight of from 1.000 g/mol to 50.000 g/mol, preferably of from 2.000 g/mol to 25.000 g/mol. Due to the specific surface of the undried coated titanium dioxide pigment particles, the attaching groups of the dispersants attach to the pigment particles easily and to a high degree.

Preferred dispersants are based on polyacrylic acid, polycarboxylic acid copolymers, polyacrylates and poylurethanes having a molecular weight of between 1.000 to 50.000 g/mol, preferably between 2.000 to 25.000 g/mol. One of the most preferred dispersants is a sodium salt of a polyacrylate with a molecular weight of 1.000 to 50.000 g/mol, preferably between 2.000 to 25.000 g/mol.

As steric dispersant are oligomeric and polymeric dispersants suitable. Particularly preferred are block- and graftpolymers. "Oligomer", as used herein, refers to a compound built from monomers, wherein the oligomer has a molecular weight of 1.000 to 5.000 g/mol. "Polymer", as used herein, refers to a compound built from monomers, wherein the polymer has a molecular weight of 5.000 to 50.000 g/mol, preferably between 5.000 to 15.000 g/mol.

In a preferred embodiment, an electrostatic dispersant is used which is a sodium polyacrylate with a molecular weight of 5.000 to 10.000 g/mol and at least one carboxyl group.

Using dispersant as described further reduces the settlement tendency of the particles. The sodium polyacrylate with a molecular weight of 5.000 to 10.000 g/mol and at least one carboxyl group shows the best results.

In a further preferred embodiment, the aqueous printing ink of the present invention comprises (i) 1.0 to 30.0 wt.%, more preferably 12.0 to 25.0 wt.% and even more preferably 18.0 to 20.0 wt.% of the titanium dioxide pigment particles. In addition or alternatively, the ink can comprise (ii) 0.1 to 10.0 wt.%, more preferably 0.4 to 7.5 wt.%, and even more preferably 0.7 to 5.0 wt.% of the dispersant; and/or (iii) 60 to 99 wt.%, preferably 70.0 to 95.0 wt.%, more preferably 80.0 to 90.0 water; and/or (iv) 0.01 to 5 wt.%, more preferably 0.05 to 2.5 wt.% and even more preferably 0.1 to 1 wt.% of at least one additive selected from the group consisting of viscosity modifier, water-miscible organic solvent, surfactant, defoamer, biocide and humectant. All wt.% indicated are with respect to the total weight of the printing ink.

The additives can be added by common techniques and methods. The viscosity modifier is preferably selected from the group consisting of glycerol, polyethers, such as polyethylene glycol and poly(ethylene oxide), cellulose polymers such as hydroxyethyl cellulose, hydroxypropyl cellulose and carboxymethyl cellulose, water-soluble acrylics, water-soluble polyesters, water-soluble polyurethanes, homopolymers of 2-ethyl-oxazoline, for example poly-2- ethyl-2-oxazoline, polyvinyl alcohol and poly(vinylpyrrolidones) and mixtures thereof.

Preferred water-miscible organic solvents include d-6-alkanols, preferably methanol, ethanol, n-propanol, isopropanol, n-butanol, sec-butanol, tert-butanol, n- pentanol, cyclopentanol and cyclohexanol; linear amides, preferably dimethylformamide or dimethylacetamide; ketones and ketone-alcohols, preferably acetone, methyl ether ketone, cyclohexanone and diacetone alcohol; water-miscible ethers, preferably tetrahydrofuran and dioxane; diols, preferably diols having from 2 to 12 carbon atoms, for example pentane-1 ,5-diol, ethylene glycol, propylene glycol, butylene glycol, pentylene glycol, hexylene glycol and thiodiglycol and oligo- and poly-alkyleneglycols, preferably diethylene glycol, triethylene glycol, polyethylene glycol and polypropylene glycol; triols, preferably 1,2,6-hexanetriol; mono-Ci-4-alkyl ethers of diols, preferably mono-Ci-4-alkyl ethers of diols having 2 to 12 carbon atoms, especially 2-methoxyethanol, 2-(2-methoxyethoxy)ethanol, 2-(2-ethoxyethoxy)-ethanol, 2-[2-(2-methoxyethoxy)ethoxy]ethanol, 2-[2-(2- ethoxyethoxy)-ethoxy]-ethanol and ethylene glycol monoallyl ether; cyclic amides, preferably 2-pyrrolidone, N-methyl-2-pyrrolidone, N-ethyl-2-pyrrolidone, caprolactam and 1,3-dimethylimidazolidone; cyclic esters, preferably caprolactone; sulfoxides, preferably dimethyl sulfoxide; and sulfones.

Preferred water-miscible organic solvents are cyclic amides, especially 2- pyrrolidone, N-methyl-pyrrolidone and N-ethyl-pyrrolidone; diols, especially 1 ,5- pentane diol, ethylene glycol, diethylene glycol and triethylene glycol; and mono-C-i- 4-alkyl and Ci-4-alkyl ethers of diols, more preferably mono- Ci-4-alkyl ethers of diols having 2 to 12 carbon atoms, especially 2-methoxy-2-ethoxy-2-ethoxyethanol.

Especially preferred solvents include 2-pyrrolidone, ethylene glycol, propylene glycol and diethylene glycol.

Further, surfactants can be employed and may be ionic or, more preferably, non-ionic. Acetylenic surfactants, fluoro surfactants and silicon surfactants are preferred. Examples of fluoro surfactants include Zonyl^{®} and Capstone^{®} grades from DuPont, e.g. Zonyl^{®} FSO, FSN and FSA and short-chain perfluoro-based anionic fluorosurfactants such as Chemguard S-103A available from Chemguard. Acetylene surfactants are more preferred especially 2,4,7,9-tetramethyl-5-decyne- 4,7-diol and ethylene oxide condensates thereof, for example Surfynol^{®} and Dynol^{®} surfactants available from Air Products. The ethylene oxide condensates of 2,4,7,9-tetramethyl-5-decyne-4,7-diol are particularly preferred. Mixtures containing different surfactants may be used. Mixed surfactants may be of the same type e.g. two non-ionic surfactants or be of different types e.g. an ionic and non-ionic surfactant.

The biocide which can also be a mixture of biocides can be used. It is preferred that the biocide comprises 1,2- benzisothazolin-3-one which is commercially available as an active solution from Lonza as Proxel^{®} GXL and Bioban^{®}, DXN (2,6-dimethyl-1 ,3-dioxan-4-yl acetate), from Dow Chemical Company, or Preventol P 91^{®} from Lanxess which is a reaction product of 5-chloro-2-methyl-2H-isothiazole-2-one and 2-methyl-2H-isothiazole-3-one.

In another aspect, the present invention is directed to an aqueous slurry comprising
(i) 40.0 to 70.0 wt.%, preferably 45.0 to 65.0 wt.%, more preferably 50.0 to 60.0 wt.% undried, coated titanium dioxide pigment particles obtainable by a method comprising the steps of a) providing an aqueous suspension of titanium dioxide base pigments, and b) forming at least one coat on said titanium dioxide base pigments, the coat is selected from the group consisting of silica, alumina, zirconia and mixtures thereof to obtain the undried, coated titanium dioxide pigment particles; and/or
(ii) 0.2 to 20.0 wt.%, preferably 0.8 to 15 wt.%, and more preferably 1.5 to 10.0 wt.% of a dispersant; and/or
(iii) 10.0 to 60.0 wt.%, preferably 20.0 to 50.0 wt.%, and more preferably 30.0 to 40.0 wt.% of water. All weight ranges indicated are with respect to the total weight of the aqueous slurry. In a preferred embodiment, the slurry comprises the undried, coated titanium dioxide pigment particles, the dispersant and water within the weight ranges given above. The slurry can be used as a concentrated precursor for the aqueous printing ink of the present invention which only needs to be diluted with water and mixed with further additives described herein.

In a further aspect, the present invention pertains to a method for obtaining an aqueous printing ink comprising undried, coated titanium dioxide pigment particles comprising the steps of. This method comprises the steps of (i) providing an aqueous suspension of titanium dioxide base pigments, (ii) coating the titanium dioxide pigment particles with at least one coat selected from the group consisting of silica, alumina, zirconia and mixtures thereof in order to obtain the undried, coated titanium dioxide pigment particles. In subsequent step (iii) the undried, coated titanium dioxide pigment particles can be optionally separated from the aqueous suspension and washed, and optionally re-dispersed in water to obtain the aqueous printing ink. In connection with the aqueous printing inks, it has already described herein as to how the steps can be conducted which can also be used here. Step (iii) is optional and can be conducted in the event that undesired byproducts need to be removed from the pigment particles and/or the aqueous printing ink.

Preferably, the method of the present invention also comprises step (iv) adding at least one dispersant selected from the group consisting of electrostatic dispersant, electrosteric dispersants and steric dispersant to obtain a mixture. Optionally, the obtained mixture is milled. This guarantees that the pigment particles interact with the dispersant.

### Examples

### Preparation of the undried, coated titanium dioxide pigment particle

A titanium dioxide pigment suspension was provided by mixing titanium dioxide pigment particles (15 kg) with water (43 l). By adding an alkaline solution, the pH value was enhanced above 10. Then, an aqueous solution of sodium silicate was added over a course of 30 minutes in an amount to result in a 0.1 wt.% silica coat referred to the total weight of the final pigment particles. Then, sodium aluminate was added over a course of 30 minutes in an amount to result in a 3 wt.% alumina coat referred to the total weight of the final pigment particles. The thus obtained undried coated titanium dioxide pigment particles was filtered and washed. After washing the undried coated titanium dioxide pigment particles is milled by wet milling using zirconia beads to obtain the narrow particle size distribution required for inkjet inks. In particular, particle sizes greater than 600 nm should be excluded to the greatest extent possible, and preferably completely excluded, as they lead to clogging of the ink jet printhead nozzles. In case the dispersant is used, the additive is added before milling.

### Preparation of the aqueous slurry with undried, coated titanium dioxide pigment particles

The undried coated titanium dioxide pigment particles were mixed with water and stirred to obtain an aqueous slurry. The final solid content of the respective slurries is equal to the weight percent of coated titanium dioxide particles based upon the total slurry composition.

### Example 1

An aqueous slurry of undried coated titanium dioxide pigment particles (5.5 kg) as stated above was prepared. Subsequently, Additive 1 (142 g, 2.3 wt.% referred to the total weight of the undried coated titanium dioxide pigment particles) which is an electrostatic additive, was added to the suspension and stirred. The mixture was milled in the laboratory agitator bead mill LabStar from Netzsch-Feinmahltechnik GmbH, Germany, for 3 h using zirconia beads. The final solid content of the slurry was 57 wt.% referred to the total weight of the slurry.

### Example 2

An aqueous slurry of undried coated titanium dioxide pigment particles (5.5 kg) as stated above was prepared. Subsequently, Additive 2 (321 g, 3.2 wt.% referred to the total weight of the undried coated titanium dioxide pigment particles), which is a steric additive, was added to the suspension and stirred. The mixture was milled in the laboratory agitator bead mill LabStar from Netzsch-Feinmahltechnik GmbH, Germany, for 3 h using zirconia beads. The final solid content of the slurry was 57 wt.% referred to the total weight of the slurry.

### Example 3

An aqueous slurry of undried coated titanium dioxide pigment particles (5.6 kg) as stated above was prepared. Subsequently, Disperbyk 2018 (559 g; 7.5 wt.% dispersant referred to the total weight of the undried coated titanium dioxide pigment particles) obtainable from BYK in Wesel, Germany, an acrylate copolymer, which is a steric dispersant, was added to the suspension and stirred. The mixture was milled in the laboratory agitator bead mill LabStar from Netzsch-Feinmahltechnik GmbH, Germany, for 3 h using zirconia beads. The final solid content of the slurry was 57 wt.% referred to the total weight of the slurry.

### Example 4

An aqueous slurry of undried coated titanium dioxide pigment particles (4.6 kg) as stated above was prepared. Subsequently, Dispex AA 4140 (99 g; 1.5 wt.% referred to the total amount of the undried coated titanium dioxide pigment particles) obtainable from BASF in Ludwigshafen, Germany, a sodium salt of acrylic polymer in water, which is an electrostatic dispersant, was added to the suspension and stirred. The mixture was milled in the laboratory agitator bead mill LabStar from Netzsch-Feinmahltechnik GmbH, Germany, for 3 h using zirconia beads. The final solid content of the slurry was 57 wt.% referred to the total weight of the slurry.

### Example 5

An aqueous slurry of undried coated titanium dioxide pigment particles (3.7 kg) as stated above was prepared. Subsequently, Disperbyk 2010 (39,7 g; 4.8 wt.% referred to the total weight of the undried coated titanium dioxide pigment particles) obtainable from BYK in Wesel, Germany, an acrylate copolymer, which is a electrosteric dispersant, was added to the suspension and stirred. The mixture was milled in a laboratory agitator bead mill LabStar from Netzsch-Feinmahltechnik GmbH, Germany, for 3 h using zirconia beads. The final solid content of the slurry was 57 wt.% referred to the total weight of the slurry.

### Preparation of the aqueous printing ink with undried, coated titanium dioxide pigment particles

### Example 6

The slurry of Example 1 (approx. 300 g) was added to a mixture containing water, humectant and organic solvent (diethyleneglycole (22 wt.%), N-pyrrolidine (11 wt.%), water (67 wt.%)) to result in an aqueous printing ink which was stirred and had a solid content of 25 wt.% referred to the total weight of said ink. The final solid content of the respective aqueous printing inks is equal to the weight percent of coated titanium dioxide particles based upon the total aqueous printing ink composition.

### Example 7

The slurry of Example 2 (approx. 300 g) was added to a mixture containing water, humectant and organic solvent (diethyleneglycole (22 wt.%), N-pyrrolidine (11 wt.%), water (67 wt.%)). The mixture was stirred. The solid content of the mixture was 25 wt.% referred to the total weight of said ink.

### Example 8

The slurry of Example 3 (approx. 300 g) was added to a mixture containing water, humectant and organic solvent (diethyleneglycole (22 wt.%), N-pyrrolidine (11 wt.%), water (67 wt.%)). The mixture was stirred. The solid content of the mixture was 25 wt.% referred to the total weight of said ink.

### Example 9

The slurry of Example 4 (approx. 300 g) was added to a mixture containing water, humectant and organic solvent (diethyleneglycole (22 wt.%), N-pyrrolidine (11 wt.%), water (67 wt.%)). The mixture was stirred. The solid content of the mixture was 25 wt.% referred to the total weight of said ink.

### Example 10

The slurry of Example 5 (approx. 300 g) was added to a mixture containing water, humectant and organic solvent (diethyleneglycole (22 wt.%), N-pyrrolidine (11 wt.%), water (67 wt.%)). The mixture was stirred. The solid content of the mixture was 25 wt.% referred to the total weight of said ink.

### Preparation of the aqueous slurry with dried, coated titanium dioxide pigment particles

Titanium dioxide pigment particles K2300 (3.8 kg) commercially available from KRONOS Titan GmbH in Leverkusen, Germany, was dispersed in water (approx. 2.3 l) and stirred to obtain an aqueous slurry with dried coated pigment particles. The final solid content of the respective aqueous printing inks is equal to the weight percent of coated titanium dioxide particles based upon the total aqueous printing ink composition.

### Comparative Example 1

An aqueous slurry of dried coated titanium dioxide pigment particles as stated above was prepared. Subsequently, Additive 1 (196 g, 2.3 wt.% referred to the total weight of the dried, coated pigment particles), which is a steric dispersant, was added to the suspension and stirred. The mixture was milled in a laboratory agitator bead mill LabStar from Netzsch-Feinmahltechnik GmbH, Germany, for 3 h using zirconia beads. The final solid content of the slurry was 57 wt.% referred to the total weight of the slurry.

### Comparative Example 2

An aqueous slurry of dried coated titanium dioxide pigment particles as stated above was prepared. Subsequently, Additive 2 (321 g, 3.2 wt.% referred to the total weight of the dried coated titanium dioxide pigment particles), which is a steric dispersant, was added to the suspension and stirred. The mixture was milled in a laboratory agitator bead mill LabStar from Netzsch-Feinmahltechnik GmbH, Germany, for 3 h using zirconia beads. The final solid content of the slurry was 57 wt.% referred to the total weight of the slurry.

### Comparative Example 3

An aqueous slurry of dried coated titanium dioxide pigment particles as stated above was prepared. Subsequently, Disperbyk 2018 (544 g; 7.5 wt.% referred to the total weight of the dried, coated pigment particles) obtainable from BYK in Wesel, Germany, a acrylate copolymer, which is a steric dispersant, was added to the suspension and stirred. The mixture was milled in a laboratory agitator bead mill LabStar from Netzsch-Feinmahltechnik GmbH, Germany, for 3 h using zirconia beads. The final solid content of the slurry was 57 wt.% referred to the total weight of the slurry.

### Comparative Example 4

An aqueous slurry of dried coated titanium dioxide pigment particles as stated above was prepared. Subsequently, Dispex AA 4140 (138 g; 1.5 wt.% referred to the total weight of the dried, coated pigment particles) obtainable from BASF in Ludwigshafen, Germany, a sodium salt of acrylic polymer in water, which is an electrostatic dispersant, was added to the suspension and stirred. The mixture was milled in a laboratory agitator bead mill LabStar from Netzsch-Feinmahltechnik GmbH, Germany, for 3 h using zirconia beads. The final solid content of the slurry was 57 wt.% referred to the total weight of the slurry.

### Comparative Example 5

An aqueous slurry of dried coated titanium dioxide pigment particles. Subsequently, Disperbyk 2010 (507 g; 4.8 wt.% referred to the total weight of the dried, coated pigment particles obtainable from BYK in Wesel, Germany, an acrylate copolymer, which is a electrosteric dispersant, was added to the suspension and stirred. The mixture was milled in a laboratory agitator bead mill LabStar from Netzsch-Feinmahltechnik GmbH, Germany, for 3 h using zirconia beads. The final solid content of the slurry was 57 wt.% referred to the total weight of the slurry.

### Preparation of the aqueous printing ink with dried, coated titanium dioxide pigment particles

### Comparative Example 6

The slurry of Comparative Example 1 (approx. 300 g) was added to a mixture containing water, humectant and organic solvent (diethyleneglycole (22 wt.%), N-pyrrolidine (11 wt.%), water (67 wt.%)) to result in an aqueous printing ink which was stirred and had a solid content of 25 wt.% referred to the total weight of said ink. The final solid content of the respective aqueous printing inks is equal to the weight percent of coated titanium dioxide particles based upon the total aqueous printing ink composition.

### Comparative Example 7

The slurry of Comparative Example 2 (approx. 300 g) was added to a mixture containing water, humectant and organic solvent (diethyleneglycole (22 wt.%), N-pyrrolidine (11 wt.%), water (67 wt.%)) to result in an aqueous printing ink which was stirred and had a solid content of 25 wt.% referred to the total weight of said ink.

### Comparative Example 8

The slurry of Comparative Example 3 (approx. 300 g) was added to a mixture containing water, humectant and organic solvent (diethyleneglycole (22 wt.%), N-pyrrolidine (11 wt.%), water (67 wt.%)) to result in an aqueous printing ink which was stirred and had a solid content of 25 wt.% referred to the total weight of said ink.

### Comparative Example 9

The slurry of Comparative Example 4 (approx. 300 g) was added to a mixture containing water, humectant and organic solvent (diethyleneglycole (22 wt.%), N-pyrrolidine (11 wt.%), water (67 wt.%)) to result in an aqueous printing ink which was stirred and had a solid content of 25 wt.% referred to the total weight of said ink.

### Comparative Example 10

The slurry of Comparative Example 5 (approx. 300 g) was added to a mixture containing water, humectant and organic solvent (diethyleneglycole (22 wt.%), N-pyrrolidine (11 wt.%), water (67 wt.%)) to result in an aqueous printing ink which was stirred and had a solid content of 25 wt.% referred to the total weight of said ink.

### Test methods and test results

### Particle size determination

The size of the titanium dioxide particles were determined by using a CPS Disc centrifuge, Model DC 20000 available from CPS Instrument, Inc. located in Florida, United States of America. The sample was prepared by obtaining a first premix by mixing 2 g of a dry pigment particles with 80 g sodium hexametaphosphate (0.06 mass % in water) commercially available from BK Giulini GmbH in Ladenburg, Germany, under the name Calgon N until the first premix was homogenized. Subsequently, 2 g of this first premix were added to 48 g Calgon N, and again sufficiently homogenized by mixing to obtain a second premix. 100 µl of this second premix were used as the sample for determining the particle size. The centrifuge was operated at 3,000 rpm. The calibration standard parameters were as follows:
Particle density: 1.385 g/mL
Peak diameter: 1.27 µL
Half height peak width: 0.08 µL

The fluid parameters were as follows:
Fluid density: 1.045 g/mL
Fluid refraction index: 1.344
Fluid viscosity: 1.2 cps

### Sedimentation test

The tendency of pigment to settle was observed by the amount of serum (clear phase) which formed over time. The second criteria was the formation of a sediment on the bottom of the bottle. A sediment which is hard or sticky cannot be re-dispersed well and is therefore not suitable for inkjet printing. The nozzles of the inkjet printhead will clog. Fast settlement will lead to differences in opacity since the ink will contain less titanium dioxide in the upper phase, than in the lower phase. Therefore, it is necessary to prove good stability in terms of anti-settlement and at the same time prevent the formation of any sediment.

For the experiment 40 ml of each example was stored in a 50 ml glass bottle. The sediment was evaluated with a plastic rod. It is important for both, the slurry and the ink that there is no pigment sediment on the bottom of the bottle and that the suspension is easy to homogenize which was awarded with "(+)".The complete evaluation criteria are given in Table 1.

**Table 1: Evaluation criteria for formation of a sediment.**

| **Evaluation** | **Sediment** |
|---|---|
| + | No visible sediment |
| 0 | Sediment, but easy to re-disperse by stirring |
| - | Hard or sticky sediment, not easy to re-disperse by stirring |

For evaluation of the sedimentation tendency the following criteria were chosen. Serum is given in mm. The suspension height in the 50 ml graduated measuring glass is 129 mm. The less serum is formed over time the better. The experiments were conducted at 22 °C and at 50 °C.

For sedimentation tests the solid content of the aqueous slurries, containing the dried coated titanium dioxide pigment particles and water was adjusted with water to 25 wt.% referred to the total weight of said slurry. As discussed above, the solids content of the aqueous slurries is the same as the total amount of coated titanium dioxide by weight, based on the total suspension.

**Table 2: Sedimentation tendency tests at various temperatures for aqueous slurries.**

| | **Example 1** | | **Comparative Example 1** | |
|---|---|---|---|---|
| | 22 °C | 50 °C | 22 °C | 50 °C |
| Time | Serum mm/ Sediment | Serum mm/ Sediment | Serum mm/ Sediment | Serum mm/ Sediment |
| 1 day | 4 / + | 5 / + | 10 / + | 11 / + |
| 7 days | 11 / + | 13 / + | 38 / - | 47 / - |
| 14 days | 16 / + | 15 / + | 47 / - | 60 / - |
| 21 days | 19 / + | 18 / + | 54 / - | 65 / - |

| | **Example 2** | | **Comparative Example 2** | |
|---|---|---|---|---|
| | 22 °C | 50 °C | 22 °C | 50 °C |
| Time | Serum mm/ Sediment | Serum mm/ Sediment | Serum mm/ Sediment | Serum mm/ Sediment |
| 1 day | 0 /+ | 0 /+ | 0 / - | 1 /- |
| 7 days | 0 /+ | 0 /+ | 5 / - | 9 / - |
| 14 days | 0 / + | 0 / + | 11 / - | 16 /- |
| 21 days | 0 /+ | 1 /+ | 16 /- | 26 / - |

| | **Example 3** | | **Comparative Example 3** | |
|---|---|---|---|---|
| | 22 °C | 50 °C | 22 °C | 50 °C |
| Time | Serum mm/ Sediment | Serum mm/ Sediment | Serum mm/ Sediment | Serum mm/ Sediment |
| 1 day | 0 / + | 0 / + | 0 / + | 0 / + |
| 7 days | 3 / + | 3 / + | 3 / + | 4 / + |
| 14 days | 3 / + | 5 / + | 8 / + | 11 / 0 |
| 21 days | 3 / + | 8 / + | 8 / 0 | 21 / 0 |

| | **Example 4** | | **Comparative Example 4** | |
|---|---|---|---|---|
| | 22 °C | 50 °C | 22 °C | 50 °C |
| Time | Serum mm/ Sediment | Serum mm/ Sediment | Serum mm/ Sediment | Serum mm/ Sediment |
| 1 day | 0 /+ | 0 /+ | 3 / + | 5 / + |
| 7 days | 1 / + | 4 / + | 15 / + | 26 / + |
| 14 days | 1 / + | 4 / + | 26 / + | 42 / + |
| 21 days | 3 / + | 5 / + | 34 / + | 53 / + |

| | **Example 5** | | **Comparative Example 5** | |
|---|---|---|---|---|
| | 22 °C | 50 °C | 22 °C | 50 °C |
| Time | Serum mm/ Sediment | Serum mm/ Sediment | Serum mm/ Sediment | Serum mm/ Sediment |
| 1 day | 0 /+ | 0 /+ | 0 / + | 0 / + |
| 7 days | 0 /+ | 0 /+ | 5 / + | 5 / + |
| 14 days | 0 /+ | 0 /+ | 7 / - | 11 / 0 |
| 21 days | 0 / + | 0 / + | 13 / - | 24 / 0 |

**Table 3: Sedimentation tendency tests at various temperatures for aqueous printing inks.**

| | **Example 6** | | **Comparative Example 6** | |
|---|---|---|---|---|
| | 22 °C | 50 °C | 22 °C | 50 °C |
| Time | Serum mm/ Sediment | Serum mm/ Sediment | Serum mm/ Sediment | Serum mm/ Sediment |
| 1 day | 2 / + | 0 / + | 0 / *-* | 0 / *-* |
| 7 days | 5 / 0 | 3 / 0 | 5 / - | 15 /- |
| 14 days | 9/ 0 | 8 / 0 | 13 / - | 19 /- |
| 21 days | 109 / 0 | 114 / 0 | 111 / - | 116 / - |

| | **Example 7** | | **Comparative Example 7** | |
|---|---|---|---|---|
| | 22 °C | 50 °C | 22 °C | 50 °C |
| Time | Serum mm/ Sediment | Serum mm/ Sediment | Serum mm/ Sediment | Serum mm/ Sediment |
| 1 day | 0 / + | 0 / + | 0 / + | 0 / + |
| 7 days | 3 / + | 5 / + | 6 / - | 11 / - |
| 14 days | 4 / + | 12 / + | 12 / - | 16 / - |
| 21 days | 5 / + | 13 / + | 114 / - | 113 / - |

| | **Example 8** | | **Comparative Example 8** | |
|---|---|---|---|---|
| | 22 °C | 50 °C | 22 °C | 50 °C |
| Time | Serum mm/ Sediment | Serum mm/ Sediment | Serum mm/ Sediment | Serum mm/ Sediment |
| 1 day | 0 / + | 0 / + | 0 / + | 0 / + |
| 7 days | 4 / + | 5 / + | 4 / - | 8 / - |
| 14 days | 5 / + | 8 / + | 6 / - | 13 / - |
| 21 days | 116 / + | 117 / + | 117 / - | 118 / - |

| | **Example 9** | | **Comparative Example 9** | |
|---|---|---|---|---|
| | 22 °C | 50 °C | 22 °C | 50 °C |
| Time | Serum mm/ Sediment | Serum mm/ Sediment | Serum mm/ Sediment | Serum mm/ Sediment |
| 1 day | 0 / + | 0 / + | 0 / + | 0 / + |
| 7 days | 2 / + | 7 / + | 5 / + | 16 / + |
| 14 days | 5 / + | 11 / + | 10 / + | 21 / + |
| 21 days | 12 / + | 114 / + | 104 / + | 111 / + |

| | **Example 10** | | **Comparative Example 10** | |
|---|---|---|---|---|
| | 22 °C | 50 °C | 22 °C | 50 °C |
| Time | Serum mm/ Sediment | Serum mm/ Sediment | Serum mm/ Sediment | Serum mm/ Sediment |
| 1 day | 0 / + | 0 / + | 0 / + | 0 / + |
| 7 days | 3 / + | 5 / + | 6 / + | 11 / + |
| 14 days | 8 / + | 5 / + | 10 / + | 16 / - |
| 21 days | 8 / + | 113 / + | 22 / + | 132 / - |

As compared to the Comparative Examples prepared with dried titanium dioxide pigment particles, the aqueous slurries and inks prepared according to the invention possess significantly increased stability, do not settle, and even more importantly the prepared aqueous slurries and inks according to the invention are not forming any sediment, hard sediment or sticky sediment at room temperatures as well as at an elevated temperature. This is made evident by the above Examples which show less serum and less sediment formation compared to its corresponding Comparative Examples. The sediment of the inks and slurries of the Comparative Examples will clog the nozzles of the inkjet printhead which is undesired. In addition, the sediment will disadvantageously lower the opacity. As a result, the inks have to be printed more often onto the substrate to achieve the same print image compared to the inks of the present invention.

## Claims

1. Aqueous printing ink comprising undried, coated titanium dioxide pigment particles obtainable by a method comprising the steps of:
(i) providing an aqueous suspension of titanium dioxide base pigments, and
(ii) forming at least one coat on said titanium dioxide base pigments, the coat is selected from the group consisting of silica, alumina, zirconia and mixtures thereof to obtain the undried, coated titanium dioxide pigment particles.

2. Aqueous printing ink comprising undried, coated titanium dioxide pigment particles obtainable by a method according to claim 1, **characterized in that**
the at least one coat is alumina.

3. Aqueous printing ink comprising undried, coated titanium dioxide pigment particles obtainable by a method according to claim 1, **characterized in that**
a silica coat is formed on the base pigments, and on the silica coat an alumina coat is formed.

4. Aqueous printing ink comprising undried, coated titanium dioxide pigment particles obtainable by a method according to any one of claims 1 to 3 further comprising the steps of (iii) separating the undried, coated titanium dioxide pigment particles from the aqueous suspension and washing the undried, coated titanium dioxide pigment particles from the aqueous suspension.

5. Aqueous printing ink comprising undried, coated titanium dioxide pigment particles obtainable by a method according to one or more of claims 1 to 4, **characterized in that** the ink further comprises at least one dispersant selected from the group consisting of electrostatic dispersant, electrosteric dispersant and steric dispersant.

6. Aqueous printing ink comprising undried, coated titanium dioxide pigment particles obtainable by a method according to claim 5, **characterized in that**
(i) the at least one dispersant has at least one attaching group attaching to the titanium dioxide pigment particle selected from the group consisting of carboxyl, phosphate, sulfate, hydroxide, and tetraalkyl amine, preferably from carboxyl, phosphate and sulfate; and has a molecular weight of from 1.000 to 50.000 g/mol, preferably of from 2.000 to 25.000 g/mol; and/or
(ii) the dispersant is based on a compound selected from the group consisting of polyacrylic acid, polycarboxylic acid copolymers, polyacrylates and poylurethanes and has a molecular weight of from 1.000 to 50.000 g/mol, preferably of from 2.000 to 25.000 g/mol; and/or
(iii) the dispersant is a sodium salt of a polyacrylate and has a molecular weight of from 1.000 to 50.000 g/mol, preferably of from 2.000 to 25.000 g/mol.

7. Aqueous printing ink comprising undried, coated titanium dioxide pigment particles obtainable by a method according to claim 5 or 6, **characterized in that** the printing ink comprises:
(i) 1.0 to 30.0 wt.%, preferably 12.0 to 25.0 wt.% and more preferably 18.0 to 20.0 wt.% of the titanium dioxide pigment particles with respect to the total weight of the printing ink; and/or
(ii) 0.1 to 10.0 wt.%, preferably 0.4 to 7.5 wt.%, and more preferably 0.7 to 5.0 wt.% of the dispersant with respect to the total weight of the printing ink; and/or
(iii) 60.0 to 99.0 wt.%, preferably 70.0 to 95.0 wt.%, more preferably 80.0 to 90.0 wt.% water with respect to the total weight of the printing ink; and/or
(iv) at least one additive selected from the group consisting of viscosity modifier, water-miscible organic solvent, surfactant, defoamer, biocide and humectant.

8. Method for obtaining an aqueous printing ink comprising undried, coated titanium dioxide pigment particles comprising the steps of:
(i) providing an aqueous suspension of titanium dioxide base pigments,
(ii) coating the titanium dioxide base pigments with at least one coat selected from the group consisting of silica, alumina, zirconia and mixtures thereof in order to obtain undried, coated titanium dioxide pigment particles,
(iii) optionally separating and washing the undried, coated titanium dioxide pigment particles from the aqueous suspension, and re-dispersing the obtained undried, coated titanium dioxide pigment particles in water to obtain the aqueous printing ink.

9. Method for obtaining an aqueous printing ink comprising undried, coated titanium dioxide pigment particles according to claim 8 further comprising the steps (iv) and (v):
(iv) adding at least one dispersant selected from the group consisting of electrostatic dispersant, electrosteric dispersants and steric dispersant to the undried, coated titanium dioxide pigment particles to obtain a mixture, and
(v) optionally milling the obtained mixture.

10. Method for printing an aqueous printing ink comprising an undried, coated titanium dioxide pigment particle obtainable by a method according to any one of claims 1 to 7 onto the surface of a substrate.

11. Aqueous slurry comprising
(i) 40.0 to 70.0 wt.%, preferably 45.0 to 65.0 wt.%, more preferably 50.0 to 60.0 wt.% undried, coated titanium dioxide pigment particles with respect to the total weight of the aqueous slurry obtainable by a method comprising the steps of
a) providing an aqueous suspension of titanium dioxide base pigments, and
b) forming at least one coat on said titanium dioxide base pigments, the coat is selected from the group consisting of silica, alumina, zirconia and mixtures thereof to obtain the undried, coated titanium dioxide pigment particles; and
(ii) 0.2 to 20.0 wt.%, preferably 0.8 to 15 wt.%, and more preferably 1.5 to 10.0 wt.% of a dispersant with respect to the total weight of the aqueous slurry; and/or
(iii) 10.0 to 60.0 wt.%, preferably 20.0 to 50.0 wt.%, and more preferably 30.0 to 40.0 wt.% water with respect to the total weight of the aqueous slurry.

12. Printing ink container comprising an aqueous printing ink according to claim 1 to 7.

13. Inkjet printer comprising an aqueous printing ink according to any one of claims 1 to 7.

14. Use of an aqueous printing ink comprising undried, coated titanium dioxide pigment particles obtainable by a method according to any one of claims 1 to 7 to print a printing image onto the surface of a substrate selected from the group consisting of paper, décor papers, corrugated cardboards, packaging, plastics, polymeric films, printed circuit boards, computer chips, automotives, wood, metal, glass, textiles and leather.

## Patentansprüche

1. Wässrige Drucktinte aus ungetrockneten beschichteten Titandioxidpigmentpartikeln, die durch ein Verfahren gewonnen werden, das die folgenden Schritte umfasst:
(i) Herstellung einer wässrigen Suspension aus Titandioxid-Basispigmenten und
(ii) Bildung von mindestens einer Schicht aus besagten Titandioxid-Basispigmenten, wobei die Schicht aus der Gruppe von Silika, Aluminiumoxid und Zirkon und Gemischen derselben ausgewählt wird, um die ungetrockneten beschichteten Titandioxidpigmentpartikel zu erhalten.

2. Wässrige Drucktinte aus ungetrockneten beschichteten Titandioxidpigmentpartikeln,
die durch ein Verfahren gemäß Anspruch 1 gewonnen werden, das sich jedoch dadurch auszeichnet, dass mindestens eine Schicht als Aluminiumoxid besteht.

3. Wässrige Drucktinte aus ungetrockneten beschichteten Titandioxidpigmentpartikeln,
die durch ein Verfahren gemäß Anspruch 1 gewonnen werden, das sich jedoch dadurch auszeichnet, dass eine Silikaschicht auf den Basispigmenten gebildet wird und das sich auf der Silikaschicht eine Aluminiumoxidschicht bildet.

4. Wässrige Drucktinte aus ungetrockneten beschichteten Titandioxidpigmentpartikeln, die durch ein Verfahren gemäß einem der Ansprüche 1 bis 3 sowie durch die folgenden Schritte gewonnen werden:
(iii) Abtrennen der ungetrockneten, beschichteten Titandioxidpigmentpartikel aus der wässrigen Suspension und Herauswaschen der ungetrockneten, beschichteten Titandioxidpigmentpartikel aus der wässrigen Suspension.

5. Wässrige Drucktinte aus ungetrockneten beschichteten Titandioxidpigmentpartikeln,
die durch ein Verfahren gemäß einem oder mehrerer der Ansprüche 1 bis 4 gewonnen werden und sich dadurch auszeichnen, dass die Tinte darüber hinaus mindestens ein Dispergiermittel enthält, das aus der Gruppe elektrostatischer, elektrosterischer und sterischer Dispergiermittel ausgewählt wurde.

6. Wässrige Drucktinte aus ungetrockneten beschichteten Titandioxidpigmentpartikeln, die durch ein Verfahren gemäß Anspruch 5 erhalten wird und sich dadurch auszeichnet, dass (i) mindestens ein Dispergiermittel eine anhaftende Gruppe besitzt, die an das Titandioxidpigmentpartikel anhaftet und aus der Gruppe ausgewählt wurde, die aus Carboxyl, Phosphat, Sulfat, Hydroxid und Tetraalkylamin besteht, vorzugsweise aus Carboxyl, Phosphat und Sulfat, mit einem Molekulargewicht von 1.000 bis 50.000 g/mol, vorzugsweise von 2.000 bis 25.000 g/mol; und/oder dass
(ii) das Dispergiermittel auf einer Verbindung basiert, die aus der Gruppe aus Polyacrylsäure, Polyacrylsäure-Copolymeren, Polyacrylaten und Polyurethanen ausgewählt wurde und ein Molekulargewicht von 1.000 bis 50.000 g/mol besitzt, vorzugsweise 2.000 bis 25.000 g/mol; und/oder dass
(iii) das Dispergiermittel ein Natriumsalz von Polacrylat ist und ein Molekulargewicht von 1.000 bis 50.000 g/mol, vorzugsweise 2.000 bis 25.000 g/mol, besitzt.

7. Wässrige Drucktinte aus ungetrockneten beschichteten Titandioxidpigmentpartikeln, die durch ein Verfahren gemäß den Ansprüchen 5 oder 6 gewonnen werden, wobei die Drucktinte sich wie folgt unterscheidet:
(i) 1,0 bis 30,0 Gew.-%, vorzugsweise 12,0 bis 25,0 Gew.-% und idealerweise 18,0 bis 20,0 Gew.-% von Titandioxidpigementpartikeln im Verhältnis zum Gesamtgewicht der Drucktinte; und oder
(iv) 0,1 bis 10,0 Gew.-%, vorzugsweise 0,4 bis 7,5 Gew.-% und idealerweise 0,7 bis 5,0 Gew.-% Dispergiermittel im Verhältnis zum Gesamtgewicht der Drucktinte; und/oder
(v) 60,0 bis 99,0 Gew.-%, vorzugsweise 70,0 bis 95,0 Gew.-% und idealerweise 80,0 bis 90,0 Gew.-% Wasser im Verhältnis zum Gesamtgewicht der Drucktinte; und/oder
(vi) mindestens einem Additiv aus der Gruppe bestehend aus Modifizierungsmitteln, wassermischbaren organischen Lösungsmitteln, Tensiden, Entschäumern, Bioziden und Befeuchtungsmitteln.

8. Verfahren zur Herstellung einer wässrigen Drucktinte aus ungetrockneten, beschichteten Titandioxidpigmentpartikeln, das die folgenden Schritte umfasst:
(i) Herstellung einer wässrigen Suspension aus Titandioxid-Basispigmenten,
(ii) Beschichtung der Titandioxid-Basispigmente mit mindestens einer Schicht, die aus der Gruppe von Silika, Aluminiumoxid und Zirkon und Gemischen derselben ausgewählt wird, um die ungetrockneten beschichteten Titandioxidpigmentpartikel zu erhalten,
(iii) optional Trennen und Auswaschen der ungetrockneten, beschichteten Titandioxidpigmentpartikel aus der wässrigen Suspension und Redispergierung der erhaltenen ungetrockneten beschichteten Titandioxidpigmentpartikel im Wasser zum Erhalt der wässrigen Drucktinte.

9. Verfahren zur Herstellung einer wässrigen Drucktinte aus ungetrockneten, beschichteten Titandioxidpigmentpartikeln gemäß Anspruch 8, das darüber hinaus die Schritte (iv) und (v) umfasst:
(iv) Zugabe mindestens eines Dispergiermittels, das aus der Gruppe der elektrostatischen, elektrosterischen und sterischen Dispergiermittel ausgewählt wird, zu den ungetrockneten und beschichteten Titandioxidpigmentpartikeln, um ein Gemisch zu erhalten, und
(v) wahlweise das Mahlen des erhaltenen Gemisches.

10. Verfahren zum Drucken einer wässrigen Drucktinte, die ungetrocknete, beschichtete Titandioxidpigmentpartikel enthält, die mit einem der in den Ansprüchen 1 bis 7 beschriebenen Verfahren auf der Oberfläche eines Substrats hergestellt werden kann.

11. Wässrige Aufschlämmung mit
(i) 40,0 bis 70,0 Gew.-%, vorzugsweise 45,0 bis 65,0 Gew.-% und idealerweise 50,0 bis 60,0 Gew.-% ungetrocknete, beschichtete Titandioxidpigmentpartikel im Verhältnis zum Gesamtgewicht der wässrigen Aufschlämmung, erhalten durch ein Verfahren, das die folgenden Schritte umfasst:
a) Erstellung einer wässrigen Suspension mit Titandioxid-Basispigmenten und
b) Bildung mindestens einer Schicht aus den erwähnten Titandioxid-Basispigmenten, wobei die Beschichtung aus einer Gruppe von Silika, Aluminiumoxid und Zirkon und Gemischen derselben ausgewählt wird, um die ungetrockneten beschichteten Titandioxidpigmentpartikel zu erhalten; und mit
(ii) 0,2 bis 20,0 Gew.-%, vorzugsweise 0,8 bis 15 Gew.-% und idealerweise 1,5 bis 10,0 Gew.-% eines Dispergiermittels im Verhältnis zum Gesamtgewicht der wässrigen Aufschlämmung; und/oder
(iii) 10,0 bis 60,0 Gew.-%, vorzugsweise 20,0 bis 50,0 Gew.-% und idealerweise 30,0 bis 400,0 Gew.-% Wasser im Verhältnis zum Gesamtgewicht der wässrigen Aufschlämmung.

12. Behälter mit Drucktinte, der eine wässrige Drucktinte gemäß Anspruch 1 bis 7 enthält.

13. Tintenstrahldrucker, der eine wässrige Drucktinte gemäß einem der Ansprüche 1 bis 7 enthält.

14. Verwendung einer wässrigen Drucktinte aus ungetrockneten beschichteten Titandioxidpigmentpartikeln, die mit einem der in den Ansprüchen 1 bis 7 beschriebenen Verfahren erhalten werden, zum Anfertigen von Druckbildern auf der Oberfläche eines Substrats aus einer Gruppe der folgenden Materialien: Papier, Dekorpapier, Wellpappe, Verpackungen, Plastik, Polymerfilme, Leiterplatten, Computerchips, Kraftfahrzeuge, Holz, Metall, Glas, Stoffe und Leder.

## Revendications

1. Encre d'impression aqueuse comprenant des particules de pigment de dioxyde de titane enrobées non séchées pouvant être obtenues par un procédé comprenant les étapes suivantes :
(i) fournir une suspension aqueuse de pigments à base de dioxyde de titane, et
(ii) former au moins une couche sur lesdits pigments à base de dioxyde de titane, la couche étant choisie dans le groupe constitué par la silice, l'alumine, la zircone et leurs mélanges, afin d'obtenir les particules de pigment de dioxyde de titane enrobées non séchées.

2. Encre d'impression aqueuse comprenant des particules de pigment de dioxyde de titane non séchées et enrobées, pouvant être obtenues par un procédé selon la revendication 1, **caractérisée en ce que** le revêtement au moins unique est de l'alumine.

3. Encre d'impression aqueuse comprenant des particules de pigment de dioxyde de titane non séchées et enrobées, pouvant être obtenues par un procédé selon la revendication 1, **caractérisée en ce qu'**un enrobage de silice est formé sur les pigments de base et qu'un enrobage d'alumine est formé sur l'enrobage de silice.

4. Encre d'impression aqueuse comprenant des particules de pigment de dioxyde de titane enrobées non séchées, pouvant être obtenues par un procédé selon l'une quelconque des revendications 1 à 3, comprenant en outre les étapes consistant à (iii) séparer les particules de pigment de dioxyde de titane enrobées non séchées de la suspension aqueuse et à laver les particules de pigment de dioxyde de titane enrobées non séchées de la suspension aqueuse.

5. Encre d'impression aqueuse comprenant des particules de pigment de dioxyde de titane non séchées et enrobées, pouvant être obtenues par un procédé selon une ou plusieurs des revendications 1 à 4, **caractérisée en ce que** l'encre comprend en outre au moins un dispersant choisi dans le groupe constitué par un dispersant électrostatique, un dispersant électrostérique et un dispersant stérique.

6. Encre d'impression aqueuse comprenant des particules de pigment de dioxyde de titane non séchées et enrobées, pouvant être obtenues par un procédé selon la revendication 5, **caractérisée en ce que** (i) le ou les dispersants ont au moins un groupe de liaison se liant à la particule de pigment de dioxyde de titane, choisi dans le groupe constitué par les groupes carboxyle, phosphate, sulfate, hydroxyde et tétraalkylamine, de préférence parmi les groupes carboxyle, phosphate et sulfate, et ont un poids moléculaire compris entre 1 000 à 50 000 g/mol, de préférence de 2 000 à 25 000 g/mol ; et/ou
(i) le dispersant est à base d'un composé choisi parmi le groupe constitué par l'acide polyacrylique, les copolymères d'acide polycarboxylique, les polyacrylates et les polyuréthanes et a un poids moléculaire compris entre 1 000 et 50 000 g/mol, de préférence entre 2 000 et 25 000 g/mol ; et/ou
(ii) le dispersant est un sel de sodium d'un polyacrylate et a un poids moléculaire compris entre 1 000 et 50 000 g/mol, de préférence entre 2 000 et 25 000 g/mol.

7. Encre d'impression aqueuse comprenant des particules de pigment de dioxyde de titane non séchées et enrobées, pouvant être obtenues par un procédé selon la revendication 5 ou 6, **caractérisée en ce que** l'encre d'impression comprend :
(i) 1,0 à 30,0 % en poids, de préférence 12,0 à 25,0 % en poids et plus préférablement 18,0 à 20,0 % en poids des particules de pigment de dioxyde de titane par rapport au poids total de l'encre d'impression ; et/ou
(ii) 0,1 à 10,0 % en poids, de préférence 0,4 à 7,5 % en poids, et plus préférablement 0,7 à 5,0 % en poids du dispersant par rapport au poids total de l'encre d'impression ; et/ou
(iii) 60,0 à 99,0 % en poids, de préférence 70,0 à 95,0 % en poids, plus préférablement 80,0 à 90,0 % en poids d'eau par rapport au poids total de l'encre d'impression ; et/ou
(iv) au moins un additif choisi parmi le groupe constitué d'un modificateur de viscosité, d'un solvant organique miscible à l'eau, d'un tensioactif, d'un agent antimousse, d'un biocide et d'un humectant.

8. Procédé pour obtenir une encre d'impression aqueuse comprenant des particules de pigment de dioxyde de titane non séchées et enrobées, comprenant les étapes suivantes :
(i) fournir une suspension aqueuse de pigments à base de dioxyde de titane,
(ii) en recouvrant les pigments à base de dioxyde de titane d'au moins une couche choisie parmi le groupe constitué de silice, d'alumine, de zircone et de mélanges de celles-ci afin d'obtenir des particules de pigment de dioxyde de titane enrobées non séchées,
(iii) séparer et laver, si on le souhaite, les particules de pigment de dioxyde de titane enrobées non séchées de la suspension aqueuse, et redisperser les particules de pigment de dioxyde de titane enrobées non séchées obtenues dans de l'eau pour obtenir l'encre d'impression aqueuse.

9. Procédé pour obtenir une encre d'impression aqueuse comprenant des particules de pigment de dioxyde de titane enrobées non séchées selon la revendication 8, comprenant en outre les étapes (iv) et (v) :
(i) ajouter au moins un dispersant choisi parmi le groupe constitué d'un dispersant électrostatique, de dispersants électrostériques et d'un dispersant stérique aux particules de pigment de dioxyde de titane enrobées non séchées afin d'obtenir un mélange, et
(ii) facultativement, broyer le mélange obtenu.

10. Procédé d'impression d'une encre aqueuse comprenant une particule de pigment de dioxyde de titane non séchée et enrobée, pouvant être obtenue par un procédé selon l'une quelconque des revendications 1 à 7, sur la surface d'un substrat.

11. Suspension aqueuse comprenant
(i) 40,0 à 70,0 % en poids, de préférence 45,0 à 65,0 % en poids, plus préférablement 50,0 à 60,0 % en poids, de particules de pigment de dioxyde de titane non séchées, enrobées, par rapport au poids total de la suspension aqueuse pouvant être obtenue par un procédé comprenant les étapes consistant à
a) fournir une suspension aqueuse de pigments à base de dioxyde de titane, et
b) former au moins une couche sur lesdits pigments à base de dioxyde de titane, la couche étant choisie parmi le groupe constitué de silice, d'alumine, de zircone et de mélanges de celles-ci afin d'obtenir les particules de pigment de dioxyde de titane enrobées non séchées ; et
(ii) 0,2 à 20,0 % en poids, de préférence 0,8 à 15 % en poids, et plus préférablement 1,5 à 10,0 % en poids d'un dispersant par rapport au poids total de la suspension aqueuse ; et/ou
(iii) 10.0 to 60.0 wt.%, preferably 20.0 to 50.0 wt.%, and more preferably 30.0 to 40.0 wt.% water with respect to the total weight of the aqueous slurry.

12. Récipient pour encre d'impression comprenant une encre d'impression aqueuse selon les revendications 1 à 7.

13. Imprimante à jet d'encre comprenant une encre d'impression aqueuse selon l'une quelconque des revendications 1 à 7.

14. Utilisation d'une encre d'impression aqueuse comprenant des particules de pigment de dioxyde de titane non séchées et enrobées, pouvant être obtenues par un procédé selon l'une quelconque des revendications 1 à 7, pour imprimer une image sur la surface d'un substrat choisi dans le groupe constitué par le papier, les papiers décoratifs, les cartons ondulés, les emballages, les plastiques, les films polymères, les cartes de circuits imprimés, les puces informatiques, les pièces automobiles, le bois, le métal, le verre, les textiles et le cuir.
